**Europäisches Patentamt**

**European Patent Office**

**Office européen des brevets**

(11) Numéro de publication: **0 010 506**
**B1**

(12) **FASCICULE DE BREVET EUROPEEN**

(45) Date de publication du fascicule du brevet:
**19.01.83**

(51) Int. Cl.³: **G 11 B 5/09**, G 11 B 7/00,
G 06 F 11/18, H 03 K 13/02

(21) Numéro de dépôt: **79400779.9**

(22) Date de dépôt: **22.10.79**

(54) Procédés et dispositifs de codage et de décodage numérique pour l'enregistrement de voies sonores avec un signal de télévision en particulier sur un vidéodisque.

(30) Priorité: **25.10.78 FR 7830316**

(43) Date de publication de la demande:
**30.04.80 Bulletin 80/9**

(45) Mention de la délivrance du brevet:
**19.01.83 Bulletin 83/3**

(84) Etats contractants désignés:
**DE GB IT NL SE**

(73) Titulaire: **THOMSON-BRANDT, 173, Boulevard
Haussmann, F-75379 Paris Cedex 08 (FR)**

(72) Inventeur: **Caillet, Pierre, "THOMSON-CSF" -
SCPI 173, bld Haussmann, F-75360 Paris Cédex 08 (FR)**
Inventeur: **Romeas, René, "THOMSON-CSF" -
SCPI 173, bld Haussmann, F-75360 Paris Cédex 08 (FR)**

(74) Mandataire: **Lepercque, Jean et al, THOMSON-CSF
SCPI 173, Bld Haussmann, F-75379 Paris Cedex 08 (FR)**

(56) Documents cités:
**DE-A-2 757 164**
**FR-A-2 375 769**
**FR-A-2 375 782**
**US-A-3 501 743**
IBM TECHNICAL DISCLOSURE BULLETIN, vol. 17, no. 5, octobre 1974, New York US MADDENS et QUINTIN: »Digital-to-Analog converter for low-level PCM-signals«, pages 1383—1384.
ELECTRONIQUE INDUSTRIELLE, no. 116, septembre 1968, Paris CHASKILEVITCH: »conversion numérique-analogique par circuit intégré«, pages 579—585.

**RADIO MENTOR ELECTRONIC, vol. 39, no. 1, janvier 1973, Munich »PCM für bessere Schallplatten«, pages 030—031.
JOURNAL OF THE AUDIO ENGINEERING SOCIETY, vol. 26, nos. 7/8, juillet-août 1978, New York US WILLCOCKS: »Some notes on digital audiotopics«, pages 549—553.
WIRELESS WORLD, vol. 81, no. 1474, juin 1975 Hayward, Heath Sussex, DWYER: »Digital techniques in recording and broadcasting«, pages 248—253.**

# 0 010 506

## Procédés et dispositifs de codage et de décodage numérique pour l'enregistrement de voies sonores avec un signal de télévision en particulier sur un vidéodisque

La présente invention se rapporte à un procédé de codage numérique de signaux sonores d'accompagnement d'un enregistrement effectué par tranches successives à la cadence des images de télévision. Ces signaux sont destinés à être emmagasinés sur le support d'enregistrement d'un système de diffusion de signaux audio-visuels et en particulier sur un vidéodisque.

Il est connu d'enregistrer le son sur un vidéodisque à l'aide d'échantillons occupant les intervalles de temps affectés au retour de balayage ligne du signal vidéo d'une image de télévision couleur. Cet enregistrement peut converser une seule voie sonore à large bande ou deux voies sonores multiplexées.

Il est bien connu également que le transmission numérique de l'information présente un rapport signal sur bruit généralement supérieur à la transmission analogique.

L'enregistrement sous forme numérique de l'information n'est cependant pas exempt de tous défauts. Des pertes ou des altérations de bits, en particulier au niveau de la lecture d'un enregistrement ou des défauts de structure sur le support d'enregistrement affectent l'intégrité du massage à transmettre.

Ce problème est bien connu par exemple dans les télétransmissions ou dans les techniques d'enregistrements destinés à l'informatique; et il y est remédié par divers procédés, entre autres par l'utilisation de codes redondants tels que »codes à détection erreurs multiples — correction erreur simple« en association avec éventuellement des bits de parité.

Toutes ces techniques mettent en oeuvre du matériel coûteux et complexe et sont de ce fait mal adaptées au cadre de l'invention. D'autre part, il est à remarquer que les intervalles de temps affectés au retour de balayage ligne du signal vidéo ayant une durée limité, s'accomodent mal de l'utilisation de codes longs conséquence d'une redondance élevée. Des données expérimentales mettent également en évidence des courbes donnant la fréquence des défauts en fonction de la durée qui, pour les supports d'enregistrement utilisés dans le cadre de l'invention, permettent d'envisager un chois plus judicieux de techniques de correction d'erreur.

Enfin, il est à noter que les caractéristiques physiologiques de l'oreille permettent certaines tolérances quant à l'intégrité du signal lu et reproduit par rapport au signal original. Il apparaît notamment possible de ne protéger que les bits des poids les plus forts des signaux numériques. Des altérations sur les bits des poids faibles ne représenteront que des fluctuations erronnées de faibles amplitude du signal sonore dont peut s'accommoder l'oreille humaine.

L'article de DWYER paru dans la revue britanique »WIRELESS WORLD«, volume 81, no 1474, juin 1975, pages 248 à 253, signale que l'on peut se contenter de corriger des erreurs sur les bits les plus significatifs. Par ailleurs, il est décrit dans cet article des techniques de codage (technique de compression de données dans lesquelles tous les bits ne sont pas systématiquement transmis) sortant du cadre de la présente invention, assorties des techniques classiques d'adjonction de bits de parité précédemment rappelées.

Cet article fait référence à un système décrit avec plus de détails dans l'article paru dans la revue allemande »RADIO MENTOR ELECTRONIC«, volume 39, no 1, janvier 1973, pages 030 à 031 et mettant en oeuvre des enregistrements séries redondant a des fins de correction et de compensation d'erreur.

Pour pallier les inconvénients et limitations signalées, la présente invention a pour objet un procédé de codage numérique de signaux analogiques alternatifs à fréquences acoustiques destinés à être enregistrés en alternance avec des signaux vidéo, dans un appareil de diffusion de signaux audio-visuels comportant un convertisseur analogique-numérique à sorties parallèles pour convertir les dits signaux analogiques en signaux numériques multibits, procédé visant à prémunir les signaux numériques ainsi codés contre les altérations rencontrés au cours du processus de transcription, procédé principalement caractérisé en ce qu'il comporte les étapes suivantes:

a) les signaux numériques subissent une première loi de transformation consistant à combiner chaque bit de poids le plus faible avec l'inverse du bit de poids le plus fort; le bit de poids le plus fort restant inchangé.

b) les signaux numériques ayant subit cette première loi de transformation subissent une seconde loi de transformation consistant à inverser sélectivement les bits de signaux numériques ayant subi la première loi de transformation.

c) au moins une partie des bits des signaux numériques ayant subi ces deux transformations sucessives sont émis plusieurs fois.

L'invention a également pour objet un procédé de codage numérique compatible avec l'enregistrement multiplex de plusieurs voies de signaux sonores.

L'invention a encore pour objet un procédé de décodage, selon les revendications 11 à 13, de signaux numériques ainsi codés.

L'invention a enfin pour objet un codeur selon les revendications 14 à 17, un décodeur selon les revendications 18 à 21 ainsi qu'un système de diffusion de signaux audio-visuels selon les revendications 22 et 23 mettant en oeuvre ces procédés de codage et de décodage numériques.

L'invention sera mieux comprise et d'autres caractéristiques apparaîtront à l'aide de la description qui suit, en référence aux figures annexées:

- la figure 1 représente schématiquement un système de diffusion de signaux audio-visuels utilisant le procédé selon l'invention;
- la figure 2 est un diagramme de temps des principales phases de fonctionnement d'un codeur selon l'invention;
- la figure 3 est un schéma de codeur selon l'invention;
- la figure 4 est un schéma de décodeur selon l'invention;
- la figure 5 est un tableau de conversion d'un signal analogique en signal numérique selon l'art antérieur;
- la figure 6 est un tableau de conversion d'un signal analogique en signal numérique selon un premier aspect de l'invention;
- la figure 7 est un diagramme explicatif de la répétition de signaux numériques multiplexés emis en triple redondance classique;
- la figure 8 est un diagramme explicatif de la répétition de signaux numériques multiplexés émis selon une loi de répartition conforme à un deuxième aspect de l'invention;
- la figure 9 est une courbe illustrative de la fréquence d'apparition de défauts en fonction de leur durée.

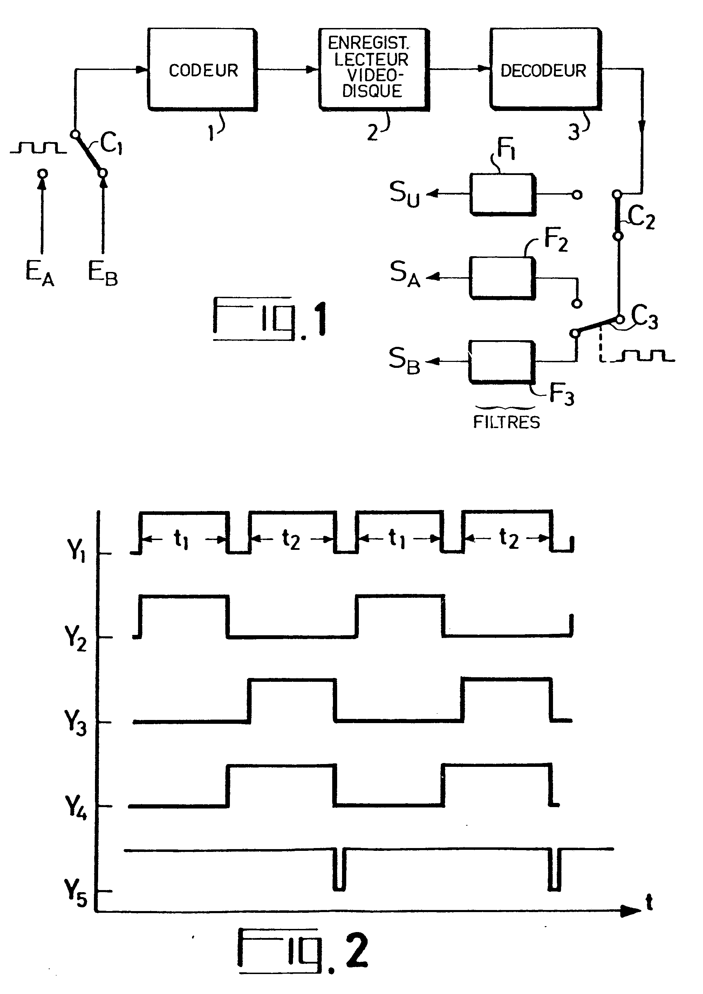

La figure 1 illustre schématiquement les différentes fonctions d'un système de diffusion de signaux audio-visuels qui, dans une application préférée, sera constitué par un enregistreur-lecteur de vidéodisque auquel on pourra appliquer le procédé de codage numérique selon l'invention, de signaux sonores à voie unique à large bande ou à deux voies multiplexées à bande réduite.

Le codage du son rentrant seul dans le cadre de l'invention, les organes étrangers à celui-ci ne sont pas décrits.

Le système enregistreur-lecteur comporte en premier lieu un codeur son 1, qui reçoit sur ses entrées $E_A$ et $E_B$ les signaux analogiques de deux voies son (voies A et B). Le codeur comprend essentiellement un convertisseur analogique-numérique auquel sera appliqué via un multiplexeur représenté par le commutateur $C_1$, une des deux voies analogiques. Le résultat des conversions est enregistré, après un codage particulier objet de l'invention et qui sera décrit plus loin, en mettant en oeuvre des techniques bien connues. Le support de l'enregistrement peut être celui d'un ensemble d'enregistrement et de lecture de vidéodisque 2 sur lequel sont gravées les informations destinées à être lues ultérieurement par des capteurs optiques qui constituent les moyens de lecture d'un décodeur son 3. Les signaux lus et décodés sont ensuite transmis par un convertisseur numérique-analogique au commutateur $C_2$.

Le convertisseur analogique-numérique 1 fonctionne au rythme d'une conversion complète pendant chaque 1/2 ligne du signal de télévision. Ce rythme donne donc une fréquence d'échantillonnage du signal sonore de deux fois la fréquence ligne, soit 31 250 Hz en standard 625 lignes/25 images seconde. Cette fréquence offre la possibilité de transmettre un signal de bande passante maximale d'environ 15 kilohertz. Cette possibilité est obtenue en bloquant le commutateur $C_1$ sur une des positions: voie A ou voie B qui sont transmises aux entrées respectives $E_A$, $E_B$ qui sert d'entrée unique, et en positionnant $C_2$ sur le filtre de sortie $F_1$ dont la bande passante est de 15 kilohertz (sortie $S_u$).

Si maintenant le commutateur $C_1$ est actionné au rythme de la fréquence de ligne de manière synchrone avec le convertisseur analogique-numérique de façon à ce que la première conversion intervienne lorsque le commutateur $C_1$ laisse passer la voie A sur l'entrée $E_A$, et la seconde lorsque le commutateur $C_1$ laisse passer la voie B sur l'entrée $E_B$ (la 3ème: voie A, la 4ème: voie B, etc. . . .) les échantillons impairs vont correspondre à la voie A et les échantillons pairs à la voie B. Il suffit dans le décodeur, en positionnant le commutateur $C_2$ vers $C_3$ et en commandant le commutateur $C_3$ avec un signal identique à celui qui commande $C_1$, c'est à dire au rythme de la fréquence de ligne, de diriger les échantillons impairs vers le filtre $F_2$ (voie A) et les échantillons pairs vers le filtre $F_3$ (voie B) pour récupérer les signaux des voies A et B disponibles sur les sorties $S_A$, $S_B$, complètement séparés et indépendants. L'échantillonnage sur chacune des voies ne se faisant plus qu'à un rythme de 15 625 hertz la bande passante de chacune de ces voies sera donc au maximum d'environ 7,5 kilohertz, les filtres $F_2$ et $F_3$ doivent être calculés en conséquence.

Avant de décrire plus avant les figures, il est utile de rappeler le principe de la conversion numérique d'un signal analogique de son.

Le signal analogique de son à transmettre est converti, par un convertisseur analogique-numérique à sorties parallèles de type connu, en un signal numérique binaire comportant dix bits de poids $2^0$ à $2^9$, au rythme de deux conversions par ligne de télévision (échantillons).

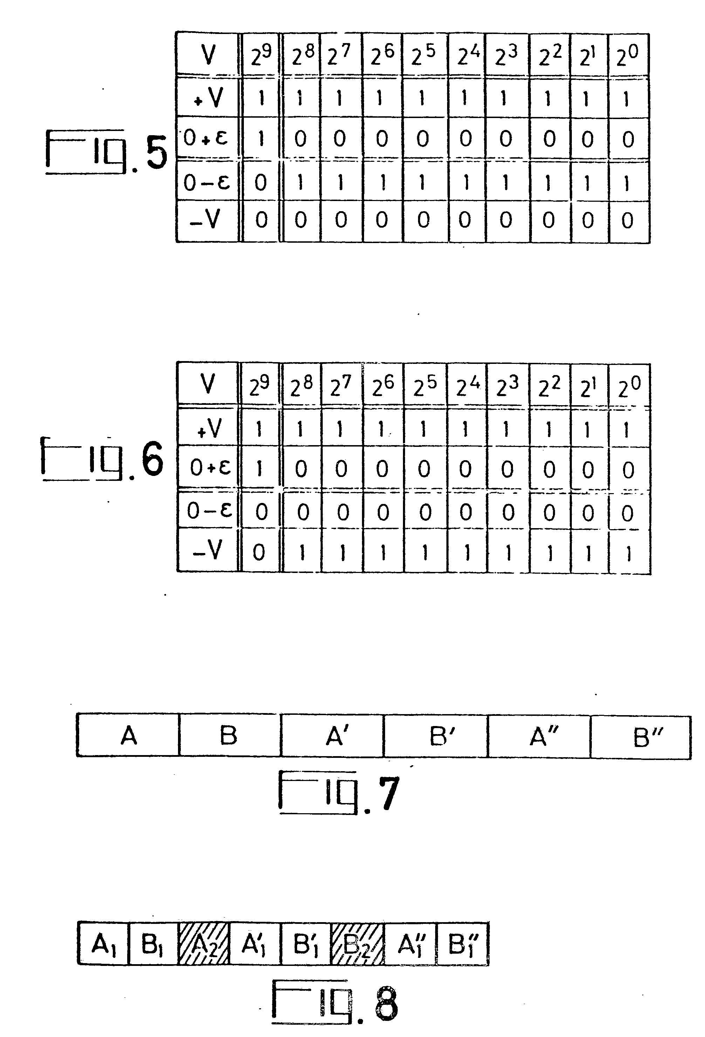

Le signal analogique son entrée peut varier autour de la valeur 0 d'une quantité allant de 0 volts $\pm \varepsilon$, à $\pm V$ max. (0 volt $\pm \varepsilon$ représentant un silence, $\pm V$ max. la puissance sonore maximum). A la sortie d'un convertisseur analogique-numérique de type connu, on obtient une représentation numérique du signal analogique à convertir donnée par le tableau de la figure 5.

On voit immédiatement qu'au voisinage de la valeur OV, c'est à dire dans les zones de silence une erreur de reproduction sur le seul bit de plus fort poids peut faire passer le signal reproduit de la valeur $0-\varepsilon$ à la valeur $-V$max. ou de la valeur $0+\varepsilon$ à la valeur $+V$max: cette erreur même brève provoque un

3

claquement désagréable à l'oreille. Or c'est précisément dans les zones de silence que ces claquements sont le plus facilement audibles, n'étant couverts par aucun autre bruit. Il convient donc de protéger au maximum ce bit de poids le plus fort, ceci est obtenu de la manière suivante:

Lorsque le signal d'entrée est compris entre 0 et +Vmax. on transmet sans intervention les dix bits du signal numérique correspondant. Par contre lorsque le signal d'entrée est compris entre —Vmax. et 0 on transmet sans intervention le bit de plus fort poids, et les compléments à 2 pour chacun des neufs autres bits, ce qui donne la représentation du tableau de la figure 6, qui illustre un premier aspect du procédé selon l'invention.

La lecture du tableau montre immédiatement qu'une erreur sur le bit de poids le plus fort au voisinage de la valeur zéro (zone de silence) n'aura pas d'incidence notable sur le signal reproduit, faisant passer le signal reproduit de $0+\varepsilon$ à $0-\varepsilon$ ou inversement. Les bits sont donc transmis sous la forme $2^9, \overline{2^9} \oplus 2^8, \overline{2^9} \oplus 2^7, \ldots, \overline{2^9} + 2^0$.

Ceci peut être obtenu à l'aide d'éléments logiques simples (inverseur, OU — EXCLUSIF).

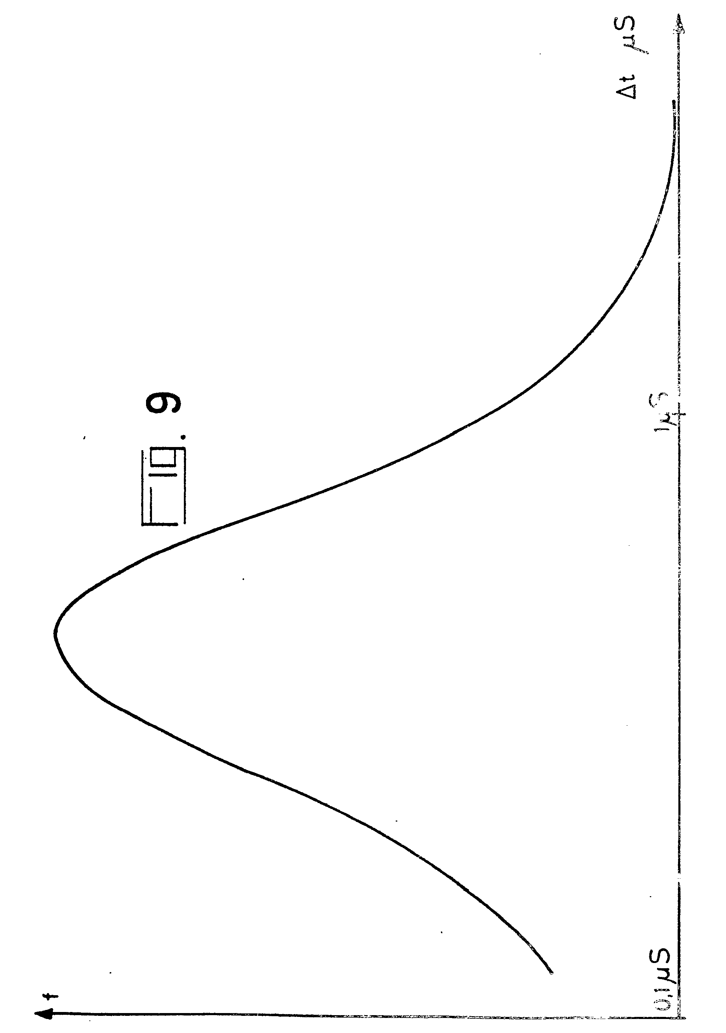

Si maintenant on se reporte au graphique de la figure 9, qui représente la courbe donnant la fréquence des altérations (ordonnée f) en fonction de leur durée (en abscisse $\Delta t$), pour un signal enregistré puis lu à partir d'un support d'enregistrement du type vidéodisque, il apparait que le plus grand nombre d'altérations dues à des pertes de signal a une durée moyenne inférieure à une microseconde. Ce résultat est utilisé avec profit dans ce qui suit.

La figure 7 montre un enregistrement à triple redondance classique qui a l'inconvénient, bien qu'il assure une bonne protection du message à enregistrer, de se présenter sous forme d'un message très long.

Il est évident qu'une erreur de reproduction n'a pas la même importance suivant qu'elle affecte un ou plusieurs bits de plus fort poids ($2^9, 2^8, 2^7, 2^6, 2^5$) ou un ou plusieurs bits de plus faible poids ($2^0, 2^1, 2^2, 2^3, 2^4$), une erreur sur ces derniers, si elle se produit sur un nombre d'échantillons n'excédant pas 10%, n'a pas d'indicence notable pour l'auditeur. On peut donc pour une raison de place, ne protéger que les bits de plus fort poids. Bien entendu, il est possible de protéger, sans rien changer à l'invention, plus ou moins que 5 bits.

Dans cet esprit la figure 8 montre une protection plus sélective, selon un deuxième aspect de l'invention. Cette protection est obtenue en transmettant trois fois, par exemple les 5 bits de plus fort poids, chacune de ces transmission étant séparée des deux autres par un espace de temps le plus long possible en restant dans le cadre de l'intervalle de retour de ligne. Ne disposant que d'un seul canal de transmission tous les bits composants les signaux sonores voie A et voie B ainsi que leurs répétitions sont donc transmis en série, ce qui conduit pour satisfaire à la condition précédemment énoncée d'espacement maximum entre les transmissions d'un même signal, à la configuration donnée par la figure 8 du train de bits composant les signaux sonores à transmettre pendant la durée de retour de ligne, c'est à dire:

5 bits poids forts voie A: 1ère transmission $A_1$, 2ème transmission $A'_1$, 3ème transmission $A''_1$.
5 bits poids forts voie B: 1ère transmission $B_1$, 2ème transmission $B'_1$, 3ème transmission $B''_1$.
5 Bits poids faibles voie A: transmission unique $A_2$.
5 bits poids faibles voie B: transmission unique $B_2$.

Cette figure montre clairement que deux transmissions successives du même mot de 5 bits ($A_1, A'_1, A''_1$, ou $B_1, B'_1, B''_1$) sont toujours séparées dans le temps par la transmission des deux autres mots de 5 bits. La durée de transmission de chaque mot de 5 bits étant d'environ 1 micro-seconde, une perte de signal ou un signal eronné de durée inférieure à 2 microsecondes ne peut affecter qu'une seule des trois transmission des mots A ou B, or la condition pour que le mot transmis soit considéré comme bon à la reproduction est qu'au moins deux des trois transmissions du même mot soient identiques, c'est à dire non affectées par une erreur quelconque selon la technique bien connue du vote majoritaire. Dans la pratique on doit obtenir une des conditions suivantes:

$$A_1 = A'_1 = A''_1 \text{ ou } A_1 = A'_1 \text{ ou } A_1 = A''_1 \text{ ou } A'_1 = A''_1$$

(il en est de même pour la voie B).

On constate également que, l'échelle étant identique sur les figures 7 et 8, le massage transmis selon la configuration du procédé de l'invention est écourté de façon appréciable par rapport à un message codé selon les règles de la triple redondance stricte, et s'accommode mieux de l'intervalle de temps, par nature restreint, d'un retour de balayage ligne, ce tout en maintenant une protection suffisante.

Dans certains cas, beaucoup moins fréquents si on se reporte de nouveau à la Fig. 9, les pertes ou erreurs de signal peuvent excéder la durée de 2 microsecondes et donc affecter la transmission de deux mots identiques successifs ($A_1$ ou $A'_1$ ou $A'_1$ et $A''_1$ par exemple).

Il doit être noté que l'on peut assimiler à une perte de signal ou erreur longue, deux pertes de signal ou erreurs courtes qui affecteraient la transmission de deux mots identiques ($A_1$ et $A'_1$, $A_1$ et $A''_1$ ou $A'_1$ et $A''_1$).

4

Dans ces conditions il devient impossible, sauf cas exceptionnel où les mots érronés seraient parfaitement identiques, d'obtenir l'une des conditions d'égalité citées précédemment ($A_1 = A'_1$; $A'_1 = A''_1$, $A_1 = A''_1$). Il suffit alors, lorsque aucune des égalités n'est vérifiée, soit de reconstituer le signal perdu en faisant la moyenne entre le signal transmis à la ligne précédente et le signal transmis à la ligne suivante, soit ce qui est beaucoup plus simple en conservant la valeur qu'avait le signal à la ligne précédente. Cette deuxième façon de procéder bien qu'introduisant une légère distortion sur le signal reproduit n'entraine pas de défaut appréciable à l'oreille si elle ne se produit que de façon espacée (moins de dix fois par minute). Ceci constitue une pratique bien connue, sortant du cadre de l'invention, qui ne sera pas décrite plus avant.

Il a été rappelé au paragraphe précédent que, dans certains cas exceptionnels, une perte de signal ou erreur longue pouvait altérer deux transmissions de mots identiques ($A_1$ et $A'_1$ par exemple) de telle façon que ces deux mots demeurent égaux ($A_1 = A'_1$). L'égalité restant toujours vérifiée, le système pourrait considérer comme bons ces deux mots erronés. Cette condition se produit particulièrement lorsqu'une perte ou erreur de signal longue vient mettre à »0« ou à »1« tous les bits de plusieurs mots successifs.

Pour éviter cet inconvénient, les bits de chacun des mots identiques transmis successivement sont, selon un troisième aspect du procédé de l'invention, brouillés au codage, et subissent un traitement inverse au décodage; c'est ainsi que l'on transmet les bits $2^9$, $2^8$, $2^7$, $2^6$, $2^5$ de la façon suivante:

dans mots $A_1$ ou $B_1$      $2^9$, $2^8$, $\overline{2^7}$, $\overline{2^6}$, $2^5$

dans mots $A'_1$ ou $B'_1$      $2^9$, $\overline{2^8}$, $\overline{2^7}$, $2^6$, $2^5$

dans mots $A''_1$ ou $B''_1$      $\overline{2^9}$, $\overline{2^8}$, $2^7$, $2^6$, $\overline{2^5}$

ainsi par exemple une erreur ayant eu pour effet de mettre à zéro tous les bits des mots $A_1$, $A'_1$ et $A''_1$ tels qu'ils sont transmis donnerait après traitement de débrouillage:

$A_1 = 0\ 0\ 1\ 1\ 0$        il est à constater qu'il n'existe plus aucune des égalités

$A'_1 = 0\ 1\ 1\ 0\ 0$        $A_1 = A'_1$

                           $A_1 = A''_1$

$A''_1 = 1\ 1\ 0\ 0\ 1$        $A_1 = A''_1$

Cet exemple n'est pas limitatif; d'autres façons de brouiller les bits peuvent être utilisées. Il est à noter que seuls les bits de poids les plus forts sont brouillés, pour les mêmes raisons qu'indiqué précédemment.

Malgré toutes les précautions prises dans la conception du codage, il est possible de rencontrer quelques cas rarissimes où deux mots faux seraient égaux. Ce serait le cas notamment lorsque deux erreurs ou pertes de signal extrêmement courtes ($< 200$ nS) affecteraient de façon identique un bit de même rang et transmis dans le même sens dans deux des trois mots transmis successivement ($A_1$ et $A'_1$, $A_1$ et $A''_1$ ou $A'_1$ et $A''_1$), par exemple inversion du bit $2^7$ à la fois dans $A_1$ et $A'_1$:

|  | mot d'origine | mot transmis brouillé | mot erroné | résultat après débrouillage |
|---|---|---|---|---|
| $A_1$ | 1 0 0 1 1 | 1 0 1 0 1 | 1 0 0 0 1 | 1 0 1 1 1 |
| $A'_1$ | 1 0 0 1 1 | 1 1 1 1 1 | 1 1 0 1 1 | 1 0 1 1 1 |

On constate immédiatement dans l'exemple ci-dessus que le mot reproduit est différent du mot d'origine (donc faux) tous en conservant l'égalité $A_1 = A'_1$.

En présence de deux mots égaux au décodage, il suffit de vérifier que le système de détection d'erreur appelé registre d'altérations de lecture détectées ou plus communément selon la terminologie anglo-saxon anti »drop-out«, dont peut être équipé le lecteur de vidéo-disque, ait ou n'ait pas détecté d'erreur de lecture pendant l'instant où étaient transmis les mots $A_1$, $A'_1$ ou $A''_1$ ou ($B_1$, $B'_1$, $B''_1$) pour lever le doute. Là encore l'utilisation d'un tel registre est connu de l'homme de métier et son fonctionnement ne sera pas détaillé.

Dans la pratique les cas de fausses égalités qui viennent d'être évoqués ne se présentant que de façon extrêmement rare, l'amélioration apporté par cette disposition supplémentaire n'est sensible que dans le cas d'utilisation de supports très abimés, à un point tel que les signaux vidéo eux mêmes seraient aussi dégradés et que l'image observée sur l'écran serait également de très mauvaise qualité.

Le procédé de décodage de signaux numériques ainsi codés et lus dans un appareil de diffusion de signaux audio-visuels après enregistrement sur un support tel qu'un vidéodisque va maintenant être décrit. Il comporte les étapes suivantes:

— les bits de poids forts et de poids faibles des signaux numériques lus sont réordonnés;
— les signaux numériques ainsi reconstitués sont transformés selon une loi inverse de la seconde loi de transformation déterminée;
— les signaux numériques successivement lus sont soumis à un vote majoritaire en cas de détection d'altération et selon le résultat de ce vote un choix est effectué entre les différents signaux numériques;
— le signal numérique résultant du vote majoritaire ou le premier des signaux numériques successivement émis lors d'une lecture sans altération est transformé après mémorisation intermédiaire selon une loi inverse à la première loi de transformation déterminée. Il comporte en outre une étape supplémentaire de démultiplexage des signaux numériques mémorisés et la mémorisation intermédiaire n'est pas autorisée lorsqu'une altération irréparable est rencontrée.

On va maintenant, en se référant aux figures 2, 3 et 4, décrire un exemple de réalisation concrète dans lequel le procédé de codage selon l'invention peut être appliqué avec profit.

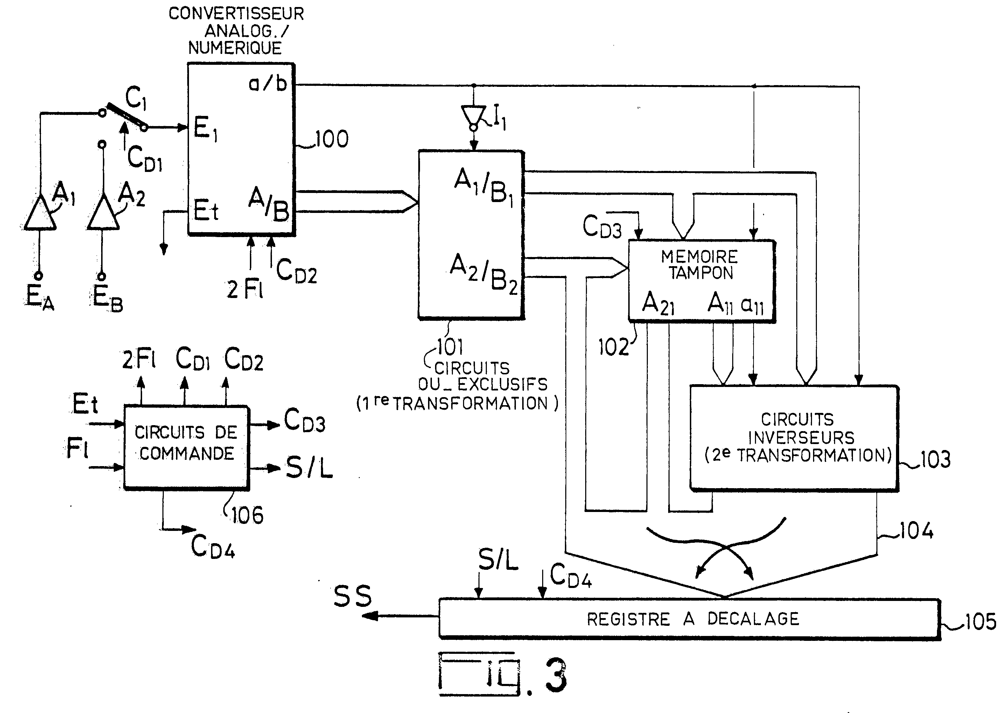

La figure 3 décrit de façon plus détaillée le codeur référencé 1 sur la figure 1. Dans ce qui suit il sera cité à titre d'exemples, un certain nombre de circuits intégrés disponibles commercialement. Il s'agit, sauf indication contraire, de circuits du catalogue de la société TEXAS INSTRUMENT. Les signaux analogiques voie A et voie B (reçues sur les entrées $E_A$ et $E_B$) sont portés à des niveaux convenables par les deux amplificateurs $A_1$, $A_2$ par exemple du type RCA CA 3140. Les signaux ainsi amplifiés vont attaquer l'entrée d'un convertisseur analogique digital 100 du type Teledyne Philbrick 4129 QZ par l'intermédiaire d'un circuit $C_1$ qui est un commutateur électronique (Analog Device) AD 7512 DI, commandé au rythme de la fréquence ligne FI (voir figure 2: $Y_4$). Un signal logique à la fréquence 2 FI attaque l'entrée de commande de conversion (entrée 2 FI), du convertisseur analogique-numérique 100. La sortie logique Et du convertisseur 100 indique que le convertisseur est actif (niveau »1«) ou a cessé de l'être (niveau »0«). Sur la sortie du convertisseur 100 sont présents les bits sortant en parallèle et transmis par l'omnibus A/B: bits $2^0$ à $2^8$ et la sortie a/b: bit $2^9$. Le codage de ces bits se fait en concordance avec le tableau de la figure 5, codage que l'on a indiqué être de l'art connu. Il est donc nécessaire d'effectuer une première transformation conforme au premier aspect du procédé de l'invention, pour obtenir le codage donné par le tableau de la figure 6. Ceci est réalisé en faisant suivre le convertisseur 100 d'une batterie de portes »OU-EXCLUSIF« 101, par exemple du type 74 LS 86, et d'un circuit inverseur $I_1$, par exemple partie d'un circuit intégré 74 LS 04. L'omnibus de sortie $A_1/B_1$ représente les bits de poids $2^5$ à $2^8$ et l'omnibus de sortie $A_2/B_2$ les bits de poids $2^0$ à $2^4$. Le bit de poids $2^9$ n'est pas transformé comme il a été indiqué précédemment. Le boitier 102 représente des mémoires tampons du type 74 LS 378, nécessaires au multiplexage des voies A et B.

Le signal de la voie A est donc converti durant le temps $t_1$. Si on se reporte au diagramme des temps de la figure 2, $Y_1$ représente le signal »Et«, disponible sur la sortie Et du convertisseur 100. Ce signal est ensuite mémorisé par les mémoires tampon 102 pendant la conversion du signal de la voie B qui s'effectue durant le temps $t_2$. A la fin du temps $t_2$ (conversion de la voie B) on dispose simultanément, d'une part en sortie des mémoires tampon, des bits du signal de la voie A qui a été converti pendant le temps $t_1$ (figure 2: $Y_2$) et d'autre part, en sortie du convertisseur 100, des bits du signal de la voie B qui a été converti durant le temps $t_2$ (figure 2: $Y_3$). Un signal S/L de décalage et chargement (figure 2: $Y_5$) donne alors accès, par l'intermédiaire du dispositif de brouillage 103 selon le troisième aspect du procédé de codage de l'invention, à des registres à décalge 105 du type 74 LS 165 à entrées parallèles et sortie série. Les connections 104 sont convenablement établies de façon à respecter l'ordre des bits tel qu'indiqué par la figure 8. Les circuits de brouillage peuvent être réalisés simplement par une batterie de circuits inverseurs du même type que $I_1$. D'autre part il va de soit que, en plus des signaux de commande déjà décrits, les circuits séquentiels, mémoires tampon et registres à décalages notamment, reçoivent des signaux d'horloge et ainsi que d'autres signaux de service nécessaires à leur bon fonctionnement: $C_{D1}$ à $C_{D4}$. Ceux-ci sont fournis par des circuits de commande et d'horloge schématisé par le boitier 106. Les circuits composant ce boitier ne seront pas décrits car ils dépendent des choix de circuits effectués pour la réalisation du codeur de la figure 3 et les types de circuits précédemment indiqués n'ont été donnés qu'à titre illustratif, de nombreux autres composants étant disponibles sur le marché. On peut utiliser des circuits tels que: 74 LS 221, 74 LS 393, 74 LS 74, etc. . .

De même les signaux série, codés selon le procédé de l'invention et disponibles sur la sortie SS, peuvent être traités par tous moyens connus, pour être enregistrés sur un support tel qu'un vidéo-disque à inscription optique (référencé 2 sur la figure 1), dans le cadre de réalisation préférée d'un système de diffusion de signaux audio-visuels selon l'invention.

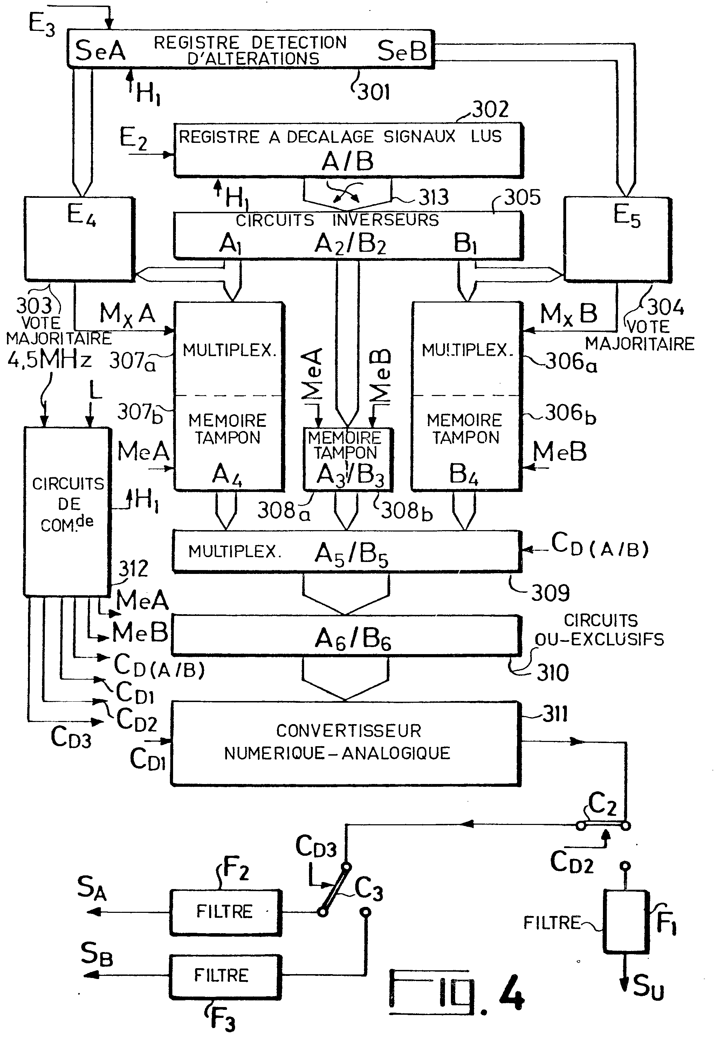

La figure 4, décrit de façon plus détaillée le décodeur son 3 de la figure 1. Le décodeur reçoit les signaux de synchronisation de ligne (L) et d'horloge de fréquence 4,5 MHz provenant du lecteur de vidéo-disque. Ces signaux sont nécessaires par ailleurs pour la synchronisation de l'image. Il reçoit également les bits de son provenant du démodulateur vidéo et lecteur, ainsi que les signaux de commande de correction de signaux erronés par le registre de détection d'altérations de lecture 301 déjà mintionné.

6

Les bits de son en provenance d'un démodulateur de lecture classique sont emmagasinés dans un registre à décalage 302 à entrée série $E_2$ et sorties parallèles A/B. Celles-ci sont reliées grâce à un cablage convenable 313, destinés à réordonner les bits lus, à une batterie d'inverseurs 305. Ce circuit est destiné à annuler l'effet du brouillage effectué dans le codeur. On dispose alors sur les omnibus de sortie $A_1$, $B_1$ (bits des plus forts poids) et $A_2$/$B_2$ (bits des plus faibles poids) du train de bits tel qu'il a été enregistré avant brouillage.

Dans ce qui suit on n'étudiera que le fonctionnement du décodage de la voie A, la voie B étant en tous points identiques.

Les bits correspondant aux mots $A_1$ et $A'_1$ de la voie A, ainsi que $A'_1$ et $A''_1$ sont comparés dans le circuit de comparaison et de vote majoritaire 303, comprenant notamment des portes »OU-EXCLUSIF«.

Avec la même horloge $H_1$, donc exactement aux mêmes instants, les indications de signaux erronés venant du lecteur ont été emmagasinées dans le registre à décalage 301 à entrée série E3 et sorties parallèles SeA et SeB.

Si l'on obtient l'une des conditions $A_1 = A'_1 = A''_1$ ou $A_1 = A'_1$ ou $A_1 = A''_1$ le mot $A_1$ est dirigé via l'omnibus $A_1$ vers l'entrée de la mémoire tampon 307b par l'intermédiaire du multiplexeur 307 a commandé le signal $M_xA$, à condition toute-fois qu'aucune indication de signal erroné ne soit présente dans un ou plusieurs étages du registre à décalage 301 correspondant au mot $A_1$. Si on obtient seulement l'égalité $A'_1 = A''_1$ ou si on obtient l'égalité $A_1 = A'_1 = A''_1$, mais qu'une indication de signal erroné est présente dans un ou plusieurs étages correspondantes au mot $A_1$ du registre 301, c'est le mot $A'_1$ qui est dirigé vers l'entrée de la mémoire tampon, à condition toutefois qu'aucune indication de signal erroné ne soit présente dans un ou plusieurs étages correspondants au mot $A'_1$ du registre 301. Si toutes les conditions précédentes ont été remplies pour diriger vers l'entrée de la mémoire, soit le mot $A_1$, soit le mot $A'_1$, l'impulsion permettant l'accès à la mémoire tampon est transmise à l'entrée MeA. Par contre si aucune des égalités suivantes n'est vérifiée: $A_1 = A'_1$, $A_1 = A''_1$ ou $A'_1 = A''_1$; ou si il y a présence d'indications de signaux erronés dans un ou plusieurs des étages correspondant au mot $A_1$ ou $A'_1$ du registre 301 qui a été sélectionné, aucune impulsion d'accès à la mémoire tampon MeA n'est générée, les sorties de la mémoire conservent donc l'état qu'elles avaient lors du précédent train de bits ayant représenté un mot reconnu comme bon par le système, pour réaliser la fonction déjà décrite de sauvegarde de l'information. Le multiplexage ne s'effectue évidemment que sur les bits des poids les plus forts qui seuls sont émis plusieurs fois. Les bits des poids les plus faibles sont transmis via l'omnibus $A_2$/$B_2$ à une seconde mémoire tampon 308a/308b.

Les sorties des mémoires tampons de la voie A: 307b – 308a et de la voie B: 306b – 308b sont connectées à un multiplexeur 309 qui laisse passer vers le convertisseur numérique-analogique 311 alternativement les bits de la voie A et les bits de la voie B, au rythme de la fréquence de ligne (durée 1/2 ligne pour la voie A, 1/2 ligne pour la voie B) sous la commande $C_{D(A/B)}$. Des opérateurs »OU-EXCLUSIF« 310 intercalés entre le convertisseur 311 et les multiplexeurs servent à effectuer l'opération inverse de celle du codage, soit:

$$(\overline{2^9} + 2^8) \oplus \overline{2^9} = 2^8$$
$$(\overline{2^9} + 2^7) \oplus \overline{2^9} = 2^7 \text{ etc...}$$

A la sortie du convertisseur 311 un commutateur électronique $C_3$ dirige le signal voie A sur la sortie $S_A$ et le signal voie B sur la sortie $S_B$ par l'intermédiaire des filtres de sortie $F_2$ et $F_3$ de 7,5 kilohertz de bande passante.

Dans le cas d'un enregistrement à une seule voie de bande passante 15 kilohertz, la sortie du convertisseur 311 peut être connectée directement à un filtre de sortie $F_1$ de 15 KHz de bande passante via un commutateur $C_2$ (sortie $S_U$).

L'ensemble des signaux de commande et d'horloge $C_{D2}$ à $C_{D3}$ nécessaires au bon fonctionnement du décodeur (outre ceux déjà mentionnés) sont générés par des circuits classiques symbolisés comme dans le cas du codeur son par un seul boitier 312. De mêmes, les signaux analogiques disponibles en sorties $S_A$ et $S_B$ ou $S_U$ sont traités par tous circuits appropriés en vue de leur reproduction ultérieure.

A titre d'exemple non limitatif, les circuits intégrés suivants disponibles, sauf indication contraire, dans le catalogue de la société TEXAS INSTRUMENT peuvent être utilisés:

| | |
|---|---|
| — registres à décalages 301, 302 | 74 LS 164 |
| — inverseurs 305 | 74 LS 04 |
| — circuits de comparaison et de vote majoritaire 303 – 304 | 74 LS 85 |
| | 74 LS 260 |
| — circuit de multiplexage et de mémoires tampon 306 – 307 | 74 LS 399 |
| — circuits de multiplexage 309 | 74 LS 157 |
| — circuits »OU-EXCLUSIF« 310 | 74 LS 86 |
| — convertisseur numérique-analogique 311 | Motorola 3410 |
| — commutateurs $C_2$, $C_3$ | Analog device AD 7512 D1 |

# 0 010 506

— circuits de commande et d'horloge 312 74 LS 20
74 LS 221
74 LS 74
74 LS 393
74 LS 00
74 LS 30

L'invention n'est pas limitée au mode de réalisation décrit et représenté. L'essentiel du procédé porte sur un codage sélectif et une disposition topologique originale des bits des signaux numériques de manière à ce qu'ils soient le moins possible affectés par des altérations pouvant se produire pendant le processus de transcritpion et n'utilisant pour l'essentiel que des circuits logiques simples et bon marché comme des inverseurs, portes »OU-EXCLUSIF« etc. . .

Sans sortir du cadre de l'invention il est possible de concevoir des dispositifs légèrement différents, par exemple: utilisation d'un message comportant un nombre de bits différent (11 ou 12 bits au lieu de 10, ou tout autre nombre), protection d'un nombre de bits différent de celui décrit (4 ou 6 au lieu de 5, ou tout autre nombre).

Il est possible également dans une version simplifiée de n'utiliser qu'une partie de l'ensemble des techniques de protection du message décrites précédemment: par exemple non limitatif, l'utilisation onéreuse au décodage du signal de détection de signal erroné du lecteur pourrait être supprimée.

Au contraire dans une version plus élaborée, il est possible d'ajouter des moyens de protection supplémentaires, tels que par exemple: contrôle du changement d'état des 2 ou 3 bits de poids le plus fort en fonction des messages reçus précédemment.

Il est également possible suivant une adaptation de la même technique de transmettre 3 voies de bande passante 5 kHz ou 4 voies de bande passante 3,5 kHz etc. . .

Bien qu'étant plus particulièrement etudié pour satisfaire aux exigences d'un système à vidéo-disque, ce procédé de codage peut être utilisé pour tout autre support d'enregistrements, bande magnétique par exemple. Les moyens de lecture/écriture peuvent être indifféremment optiques ou magnétiques.

Le procédé de codage peut également être utilisé avec des fréquences de balayage de ligne différentes de celle utilisée dans la présente description, dans ce cas les bandes passantes possibles du signal transmis (7,5 ou 15 kHz) dans l'exemple décrit varient proportionnellement à la fréquence de balayage de ligne utilisée.

Il doit être noter que les fréquences acoustiques des voies son ne sont limitées qu'en valeur supérieure. Le système peut transmettre des très basses fréquences jusqu'à une limite proche du continu.

Enfin le procédé de codage peut être utilisé seul, en lui ajoutant des moyens de synchronisation, c'est à dire sans être accompagné forcément d'un signal vidéo de télévision. Il peut par contre être accompagné d'un signal autre qu'un signal vidéo de télévision.

## Revendications

1. Procédé de codage numérique de signaux analogiques alternatifs à fréquences acoustiques destinés à être enregistrés en alternance avec des signaux vidéo, dans un appareil de diffusion de signaux audio-visuels comportant un convertisseur analogique-numérique à sorties parallèles pour convertir les dits signaux analogiques en signaux numériques multibits, procédé visant à prémunir les signaux numériques ainsi codés contre les altérations rencontrées au cours du processus de transcription, caractérisé en ce qu'il comporte les étapes suivantes:

a) les signaux numériques subissent une première loi de transformation consistant à combiner chaque bit de poids le plus faible avec l'inverse du bit de poids le plus fort; le bit de poids le plus fort restant inchangé;

b) les signaux numériques ayant subit cette première loi de transformation subissent une seconde loi de transformation consistant à inverser sélectivement les bits de signaux numériques ayant subi la première loi de transformation;

c) au moins une partie des bits des signaux numériques ayant subi ces deux transformations secessives sont émis plusieurs fois.

2. Procédé de codage selon la revendication 1, caractérisé en ce que la combinaison de chaque bit de poids le plus faible avec l'inverse du bit de poids le plus fort consiste en une opération logique »OU-EXCLUSIF«.

3. Procédé de codage selon la revendication 1, caractérisé en ce que ladite partie des bits des signaux numériques transformés sont émis trois fois pour réaliser une redondance triple.

4. Procédé de codage selon la revendication 3, caractérisé en ce que seuls les bits de poids les plus forts sont émis plusieurs fois et que les bits de poids les plus faibles séparent les bits de poids les plus

8

forts des signaux numériques répétés.

5. Procédé de codage selon la revendication 1, caractérisé en ce que l'inversion sélective de bits selon la seconde loi affecte des bits différents des dites parties de bits des signaux numériques successivement émis.

6. Procédé de codage selon la revendication 5, caractérisé en ce que seuls les bits de poids les plus forts subissent l'inversion sélective selon la seconde loi.

7. Procédé de codage selon les revendications 1 à 6, caractérisé en ce que les signaux numériques proviennent de la conversion analogique-numérique par échantillonnage d'une source unique de signaux analogiques.

8. Procédé de codage selon les revendications 1 à 6, caractérisé en ce que les signaux numériques proviennent de la conversion analogique-numérique de plusieurs sources différentes de signaux analogiques multiplexées.

9. Procédé de codage selon la revendication 8, caractérisé en ce que les signaux numériques ayant subi la première transformation sont multiplexés en temps.

10. Procédé de codage selon la revendication 9, caractérisé en ce que, les sources différentes de signaux analogiques étant au nombre de deux et la conversion analogique-numérique de ces signaux produisant des premiers et seconds signaux numériques, les bits de plus forts poids de chacun de ces signaux étant émis trois fois et les bits de plus faibles poids une seule fois, le multiplexage en temps consiste à émettre les signaux numériques après transformation selon la première loi, suivant la séquence: première transmission des bits de plus forts poids successivement des premiers ($A_1$) et seconds ($B_1$) signaux numériques, transmission unique des bits de plus faibles poids des premiers signaux numériques ($A_2$), deuxième transmission des bits de plus forts poids des premiers ($A'_1$) et seconds ($B'_1$) signaux numériques, transmission unique des bits de plus faibles poids des seconds signaux numériques ($B_2$) et troisième transmission des bits de plus forts poids des premiers ($A''_1$) et seconds ($B''_1$) signaux numériques.

11. Procédé de décodage dans un appareil de diffusion de signaux audio-visuels comportant des organes de lecture et un registre de détection d'altérations de lecture de signaux numériques codés, selon l'une quelconque des revendications 1 à 10, caractérisé en ce qu'il comporte les étapes suivantes:

— les bits de poids forts et de poids faibles des signaux numériques lus sont réordonnés;
— les signaux numériques ainsi réordonnés sont transformés selon une loi inverse de la seconde loi de transformation déterminée;
— les signaux sumériques successivement lus sont soumis à un vote majoritaire en cas de détection d'altération et selon le résultat de ce vote un choix est effectué entre les différents signaux numériques;
— le signal numérique résultant du vote majoritaire ou le premier des signaux numériques successivement émis, lors d'une lecture sans altération, est transformé après mémorisation intermédiaire selon une loi inverse à la première loi de transformation déterminée.

12. Procédé de décodage selon la revendication 13 de plusieurs signaux numériques multiplexés provenant de la conversion de sources de signaux analogiques différentes, caractérisé en ce qu'il comporte une étape supplémentaire de démultiplexage des signaux numériques mémorisés.

13. Procédé de décodage selon l'une quelconque des revendications 13 ou 14, caractérisé en ce que la mémorisation intermédiaire n'est pas autorisée lorsqu'une altération irréparable des signaux numériques lus est rencontrée.

14. Codeur numérique de signaux sonores d'accompagnement d'un enregistrement effectué par tranches successives dans un système de diffusion de signaux audio-visuels, sur un support pouvant introduire des altérations sur des signaux enregistrés, signaux sonores obtenus par échantillonnage dans les intervalles séparant les tranches à l'aide d'un convertisseur analogique-numérique (100) à sorties parallèles, caractérisé en ce qu'il comporte un premier circuit logique ($I_1$, 101) recevant les sorties parallèles du convertisseur analogique-numérique, un second circuit logique (103) recevant les sorties de plus fort poids du premier circuit logique et un registre à décalage (105) à sortie série et dont les entrées parallèles sont reliées par un câblage déterminé (104) aux sorties de plus faible poids du premier circuit logique (101) et à toutes les sorties du second circuit logique (103).

15. Codeur numérique selon la revendication 14, caractérisé en ce que le premier circuit logique comporte un circuit inverseur ($I_1$) recevant le bit de poids le plus fort et des portes logiques (101) »OU-EXCLUSIF« recevant tous les autres bits.

16. Codeur numérique selon la revendication 14, caractérisé en ce que le second circuit logique (103) est constitué par des circuits inverseurs.

17. Codeur numérique selon la revendication 14, de signaux sonores provenant de plusieurs sources ($E_A$, $E_B$) devant être multiplexées, caractérisé en ce qu'il comporte de plus une mémoire tampon (102) recevant les sorties du premier circuit logique (101) ainsi que le bit de poids le plus fort et dont les sorties sont reliées sélectivement aux entrées du second circuit logique (103) et du registre à décalage (105) à entrées parallèles.

18. Décodeur de signaux numériques représentant des signaux sonores, lus à partir du support d'enregistrement d'un système de diffusion de signaux audio-visuels, signaux codés à l'aide d'un codeur selon l'une quelconque des revendications 14 à 17 et pouvant présenter des altérations, décodeur muni d'un registre d'altérations de lecture détectées (301), caractérisé en ce qu'il comporte un registre à décalage (302) à entrée série (E₂) et dont les sorties parallèles sont reliées aux entrées d'un premier circuit logique (305), des circuits de comparaison et de vote majoritaire (303, 304) recevant les sorties de plus forts poids du premier circuit logique (305) et des signaux en provenance du registre de détection d'altérations de lecture (301), un circuit de multiplexage (307a, 306a) recevant des signaux de commande des circuits de comparaison et de vote majoritaire et les sorties de poids les plus forts du premier circuit logique et dont les sorties sont reliées aux entrées d'une première mémoire tampon (307b, 306b), une seconde mémoire tampon (308a, 308b) recevant les sorties de plus faibles poids du premier circuit logique (305), les sorties des première et seconde mémoire tampon étant reliées à un second circuit logique (310) et un convertisseur numérique-analogique (311) dont les entrées parallèles reçoivent les sorties du second circuit logique.

19. Décodeur selon la revendication 18, caractérisé en ce que le premier circuit logique (305) est constitué par des circuits inverseurs.

20. Décodeur selon la revendication 18, caractérisé en ce que le second circuit logique (310) est constitué par des portes logiques »OU-EXCLUSIF«.

21. Décodeur selon la revendication 18 de signaux numériques représentant des signaux sonores en provenance de plusieurs sources à multiplexer, caractérisé en ce qu'il comporte de plus un multiplexeur (309) qui reçoit les sorties des première et seconde mémoires tampon (306b, 307b, 308a, 308b) et dont les sorties sont reliées aux entrées du second circuit logique (310).

22. Système de diffusion de signaux audio-visuels selon l'une quelconque des revendications précédentes, caractérisé en ce qu il est fait usage de moyens optiques pour transcrire les signaux emmagasinés sur le support d'enregistrement.

23. Système de diffusion de signaux audio-visuels selon l'une quelconque des revendications précédentes, caractérisé en ce qu'il est fait usage de moyens magnétiques pour transcrire les signaux emmagasinés sur le support d'enregistrement.

## Patentansprüche

1. Verfahren zur digitalen Codierung von tonfrequenten analogen Wechselsignalen, die abwechselnd mit Videosignalen in einem Gerät für die Verbreitung von audiovisuellen Signalen aufgezeichnet werden sollen, mit einem Analog/Digital-Umsetzer, der parallele Ausgänge aufweist und die Analogsignale in Multibit-Digitalsignale umsetzt, wobei das Verfahren darauf abzielt, die so codierten digitalen Signale gegen Veränderungen zu schützen, die sie im Laufe des Überspielvorganges erfahren, dadurch gekennzeichnet, daß es die folgenden Schritte umfaßt:

a) Die Digitalsignale erfahren eine Transformation nach einem ersten Gesetz, das darin besteht, daß jedes niedrigstwertige Bit mit dem invertierten höchstwertigen Bit kombiniert wird, wobei das höchstwertige Bit unverändert bleibt;

b) die nach dem ersten Gesetz transfortierten Digitalsignale erfahren eine Transformation nach einem zweiten Gesetz, das darin besteht, daß selektiv diejenigen Bits der Digitalsignale, welche die Transformation nach dem ersten Gesetz erfahren haben, invertiert werden;

c) wenigstens ein Teil derjenigen Bits der Digitalsignale, welche diese beiden aufeinanderfolgenden Transformationen erfahren haben, wird mehrmals ausgesandt.

2. Codierverfahren nach Anspruch 1, dadurch gekennzeichnet, daß die Kombination jedes niedrigstwertigen Bits mit dem invertierten höchstwertigen Bit aus einer logischen »EXKLUSIV-ODER«-Operation besteht.

3. Codierverfahren nach Anspruch 1, dadurch gekennzeichnet, daß derjenige Teil der Bits der Digitalsignale, die transformiert wurden, dreimals ausgesandt wird, um eine Dreifachredundanz zu schaffen.

4. Codierverfahren nach Anspruch 3, dadurch gekennzeichnet, daß nur die höchstwertigen Bits mehrmals ausgesandt werden und daß die niedrigstwertigen Bits die höchstwertigen Bits von den wiederholten Digitalsignalen trennen.

5. Codierverfahren nach Anspruch 1, dadurch gekennzeichnet, daß die selektive Inversion der Bits nach dem zweiten Gesetz diejenigen Bits betrifft, die verschieden von den genannten Teilen von Bits der Digitalsignale sind, welche nacheinander ausgesandt werden.

6. Codierverfahren nach Anspruch 5, dadurch gekennzeichnet, daß nur die höchstwertigen Bits die selektive Inversion nach dem zweiten Gesetz erfahren.

7. Codierverfahren nach Ansprüchen 1 bis 6, dadurch gekennzeichnet, daß die Digitalsignale durch Analog/Digital-Umsetzung der Abtastwerte einer einzigen Analogsignalquelle gewonnen werden.

8. Codierverfahren nach den Ansprüchen 1 bis 6, dadurch gekennzeichnet, daß die Digitalsignale

**0 010 506**

durch Analog/Digital-Umsetzung von mehreren verschiedenen multiplexierten Analogsignalquellen erhalten werden.

9. Codierverfahren nach Anspruch 8, dadurch gekennzeichnet, daß die Digitalsignale, welche die erste Transformation erfahren haben, zeitmultiplexiert sind.

10. Codierverfahren nach Anspruch 9, dadurch gekennzeichnet, daß, wenn die Anzahl der verschiedenen Analogsignalquellen zwei beträgt und die Analog/Digital-Umsetzung dieser Signale erste und zweite Digitalsignale ergibt und die höchstwertigen Bits jedes dieser Signale dreimal und die niedrigstwertigen Bits einmal ausgesandt werden, die Zeitmultiplexierung darin besteht, daß die Digitalsignale nach der Transformation gemäß dem ersten Gesetz nach der folgenden Sequenz ausgesandt werden: Erste Übertragung der höchstwertigen Bits nacheinander für die ersten Digitalsignale ($A_1$) und die zweiten Digitalsignale ($B_1$), einmalige Übertragung der niedrigstwertigen Bits der ersten Digitalsignale ($A_2$), zweite Übertragung der höchstwertigen Bits der ersten Digitalsignale ($A'_1$) und der zweiten Digitalsignale ($B'_1$), einmalige Übertragung der niedrigstwertigen Bits der zweiten Digitalsignale ($B_2$) und dritte Übertragung der höchstwertigen Bits der ersten Digitalsignale ($A''_1$) und der zweiten Digitalsignale ($B''_1$).

11. Verfahren zum Decodieren in einem Gerät für die Verbreitung von audiovisuellen Signalen, mit Leseorganen und einem Register für beim Auslesen der nach einem der Ansprüche 1 bis 10 codierten Digitalsignale festgestellten Veränderungen bzw. Verfälschungen, gekennzeichnet durch die folgenden Schritte:

— Die hochwertigen Bits und die niederwertigen Bits der gelesenen Digitalsignale werden wieder geordnet;
— die so wieder geordneten Digitalsignale werden nach einem Gesetz transformiert, das die Umkehrung des zweiten bestimmten Transformationsgesetzes ist;
— die nacheinander ausgelesenen Digitalsignale erfahren eine Majoritätsentscheidung, wenn eine Veränderung festgestellt wird, und gemäß dem Ergebnis dieser Entscheidung wird eine Auswahl unter den verschiedenen Digitalsignalen getroffen;
— das aus der Majoritätsentscheidung resultierende Digitalsignal oder, beim Auslesen ohne Veränderung, das erste der nacheinander ausgesandten Digtalsignale wird nach Zwischenspeicherung gemäß einem Gesetzt transformiert, das die Umkehrung des ersten bestimmten Transformationsgesetzes ist.

12. Decodierverfahren nach Anspruch 13, für mehrere multiplexierte Digitalsignale, die durch Umsetzung von verschiedenen Analogsignalen entstehen, dadurch gekennzeichnet, daß es einen zusätzlichen Schritt des Demultiplexierens der gespeicherten Digitalsignale umfaßt.

13. Decodierverfahren nach Anspruch 13 oder 14, dadurch gekennzeichnet, daß die Zwischenspeicherung verboten wird, wenn eine unbehebbare Verfälschung der gelesenen Digitalsignale angetroffen wird.

14. Digitalcodierer für Tonsignale, welche eine Aufzeichnung begleiten, die in aufeinanderfolgenden Abschnitten in einem System zur Verbreitung von audiovisuellen Signalen auf einem Träger durchgeführt wird, der Verfälschungen der aufgezeichneten Signale einführen kann, wobei die Tonsignale durch Abtastung in den Intervallen zwischen den Abschnitten mittels eines Analog/Digital-Umsetzers (100) mit parallelen Ausgängen erhalten werden, dadurch gekennzeichnet, daß er eine erste Logikschaltung ($I_1$, 101), welche die parallelen Ausgangssignale des Analog/Digital-Umsetzers empfängt, eine zweite Logikschaltung (103), welche die höchstwertigen Ausgangssignale der ersten Logikschaltung empfängt, und ein Schieberegister (105) mit seriellem Ausgang umfaßt, dessen parallele Eingänge über eine bestimmte Verdrahtung (104) mit den niedrigstwertigen Ausgängen der ersten Logikschaltung (101) und mit allen Ausgängen der zweiten Logikschaltung (103) verbunden sind.

15. Digitalcodierer nach Anspruch 14, dadurch gekennzeichnet, daß die erste Logikschaltung eine Inverterschaltung ($I_1$) umfaßt, welche die höchstwertigen Bits empfängt, und »EXKLUSIV-ODER«-Logikgatter (101) enthält, welche die anderen Bits empfangen.

16. Digitalcodierer nach Anspruch 14, dadurch gekennzeichnet, daß die zweite Logikschaltung (103) durch Inverterschaltungen gebildet ist.

17. Digitalcodierer nach Anspruch 14, für Tonsignale aus mehreren Quellen ($E_A$, $E_B$), die multiplexiert werden sollen, dadurch gekennzeichnet, daß er zusätzlich einen Pufferspeicher (102) enthält, welcher die Ausgangssignale der ersten Logikschaltung (101) sowie das höchstwertige Bit empfängt und dessen Ausgänge selektiv mit den Eingängen der zweiten Logikschaltung (103) und des Schieberegisters (105) mit parallelen Eingängen verbunden sind.

18. Decoder für Tonsignale darstellende Digitalsignale, die von einem Aufzeichnungsträger eines Systems zur Verbreitung von audiovisuellen Signalen ausgelesen werden, wobei die Signale durch einen Codierer nach einem der Ansprüche 14 bis 17 codiert sind und Verfälschungen aufweisen können, wobei der Decoder mit einem Register (301) für festgestellte Leseverfälschungen versehen ist, dadurch gekennzeichnet, daß er ein Schieberegister (302) mit seriellem Eingang ($E_2$), dessen parallele Ausgänge mit den Eingängen einer ersten Logikschaltung (305) verbunden sind, Vergleichs-

11

und Majoritätsentscheidungs-Schaltungen (303, 304), welche die höchstwertigen Ausgangssignale der ersten Logikschaltung (305) und Signale aus dem Register (301) für festgestellte Leseverfälschungen empfängen, eine Multiplexierschaltung (307a, 306a), welche Steuersignale aus den Vergleichs- und Majoritätsentscheidungs-Schaltungen sowie die höchstwertigen Ausgangssignale der ersten Logikschaltung empfängt und deren Ausgänge mit den Eingängen eines ersten Pufferspeichers (307b, 306b) verbunden sind, einen zweiten Pufferspeicher (308a, 308b), welcher die niedrigstwertigen Ausgangssignale der ersten Logikschaltung (305) empfängt, wobei die Ausgänge des ersten Pufferspeichers und des zweiten Pufferspeichers mit einer zweiten Logikschaltung (310) verbunden sind, und einen Digital/Analog-Umsetzer (311) umfaßt, dessen parallele Eingänge die Ausgangssignale der zweiten Logikschaltung empfangen.

19. Decoder nach Anspruch 18, dadurch gekennzeichnet, daß die erste Logikschaltung (305) aus Inverterschaltungen gebildet ist.

20. Decoder nach Anspruch 18, dadurch gekennzeichnet, daß die zweite Logikschaltung (310) aus »EXKLUSIV-ODER«-Logikgattern gebildet ist.

21. Decoder nach Anspruch 18, für Digitalsignale, welche Tonsignale aus mehreren zu multiplexierenden Quellen darstellen, dadurch gekennzeichnet, daß er ferner einen Multiplexer (309) umfaßt, der die Ausgangssignale des ersten und des zweiten Pufferspeichers (306b, 307b, 308a, 308b) empfängt und dessen Ausgänge mit den Eingängen der zweiten Logikschaltung (310) verbunden sind.

22. System zur Verbreitung von audiovisuellen Signalen nach einem der vorstehenden Ansprüche, dadurch gekennzeichnet, daß von optischen Einrichtungen zum Übertragen von gespeicherten Signalen auf den Aufzeichnungsträger Gebrauch gemacht wird.

23. System zur Verbreitung von audiovisuellen Signalen nach einem der vorstehenden Ansprüche, dadurch gekennzeichnet, daß Gebrauch von magnetischen Einrichtungen zum Übertragen von gespeicherten Signalen auf den Aufzeichnungsträger gemacht wird.

## Claims

1. Method of numeric coding of alternating audio frequency analog signals to be recorded alternatingly with video signals in an apparatus for the diffusion of audio-visual signals, comprising an analog-digital converter having parallel outputs for converting said analog signals into multi-bit digital signals, the method aiming at protecting the thus coded digital signals from alterations encountered in the course of the transscription process, characterized in that it comprises the following steps:

a) the digital signals are transformed in accordance with a first rule consisting in combining each least significant bit with the inverted most significant bit; the most significant bit remaining unchanged;

b) the digital signals having been transformed in accordance with this first rule are transformed in accordance with a second rule consisting in selectively inverting those bits of the digital signals having been transformed in accordance with the first rule;

c) at least part of the bits of the digital signals which have successively been subjected to both transformations are transmitted several times.

2. Coding method in accordance with claim 1, characterized in that the combination of each least significant with the inverted most significant bit consists in a logic »EXCLUSIVE OR« operation.

3. Coding method in accordance with claim 1, characterized in that said part of the digital signal bits which has been transformed are transmitted three times to achieve threefold redundancy.

4. Coding method in accordance with claim 3, characterized in that only the most significant bits are transmitted several times and that the least significant bits separate the most significant bits from repeated digital signals.

5. Coding method in accordance with claim 1, characterized in that the selective inversion of the bits in accordance with the second rule is applied to different bits of said parts of successively transmitted digital signal bits.

6. Coding method in accordance with claim 5, characterized in that only the most significant bits are subjected to the selective inversion in accordance with the second rule.

7. Coding method in accordance with claims 1 to 6, characterized in that the digital signals originate from the analog-digital conversion by sampling a unique analog signal source.

8. Coding method in accordance with claims 1 to 6, characterized in that the digital signals originate from the analog-digital conversion of a plurality of different multiplexed analog signal sources.

9. Coding method in accordance with claim 8, characterized in that the digital signals which have been subjected to the first transformation are time multiplexed.

10. Coding method in accordance with claim 9, characterized in that, the different analog signal sources being in a number of two and the analog-digital conversion of these signals producing first and second digital signals, the most significant bits of each of these signals are transmitted three times and the least significant bits only once, the time multiplexing consisting in transmitting the digital signals after transformation in accordance with the first law, in the following sequence: first transmission of the most significant bits successively of the first ($A_1$) and the second ($B_1$) digital signals, single transmission of the least significant bits of the first digital signals ($A_2$), second transmission of the most significant bits of the first ($A'_1$) and second ($B'_1$) digital signals, single transmission of the least significant bits of the second digital signals ($B_2$) and third transmission of the most significant bits of the first ($A''_1$) and second ($B''_1$) digital signals.

11. Method of decoding in an apparatus for the diffusion of audio-visual signals comprising reading members and a register for detected alterations of reading signals coded in accordance with any of claims 1 to 10, characterized in that it comprises the following steps:

— the most significant bits and the least significant bits of the read digital signals are rearranged;
— the thus rearranged digital signals are transformed in accordance with a rule inverse to second determined transformation rule;
— the successively read digital signals are subjected to a majority decision in case of detection of alterations, and in accordance with the result of this decision, a choice is made between the different digital signals;
— the digital signals resulting from the majority decision or, in case of reading without alterations, the first of the successively transmitted digital signals, is transformed after intermediate storage in accordance with a rule inverse to the first determined transformation rule.

12. Decoding method in accordance with claim 13 for decoding a plurality of multiplexed digital signals originating from the conversion of different analog signal sources, characterized in that it comprises an additional step of demultiplexing the stored digital signals.

13. Decoding method in accordance with any of claims 13 or 14, characterized in that the intermediate storage is not allowed when an irreparable alteration of the read digital signals is encountered.

14. Digital coder for sound signals accompanying a recording performed by successive sections in a system for the diffusion of audio-visual signals on a support susceptible of introducing alterations of the recorded signals, the audio signals being obtained by sampling in the invervals separating the sections using an analog-digital converter (100) having parallel outputs, characterized in that it comprises a first logic circuit ($I_1$, 101) receiving the parallel outputs of the analog-digital converter, a secons logic circuit (103) receiving the most significant outputs of the first logic circuit and a shift register (105) having a serial output and the parallel inputs of which are connected, through determined wiring (104) to the least significant outputs of the first logic circuit (101) and to all of the outputs of the second logic circuit (103).

15. Digital coder in accordance with claim 14, characterized in that the first logic circuit comprises an inverter circuit ($I_1$) receiving the most significant bits and »EXCLUSIVE OR« logic gates (101) receiving all of the other bits.

16. Digital coder in accordance with claim 14, characterized in that the second logic circuit (103) is formed by inverter circuits.

17. Digital coder in accordance with claim 14, for audio signals originating from a plurality of sources ($E_A$, $E_B$) to be multiplexed, characterized in that it further comprises a buffer memory (102) receiving the outputs of the first logic circuit (101) as well as the most significant bit and the outputs of which are selectively connected to the inputs of the second logic circuit (103) and the shift register (105) having parallel inputs.

18. Decoder for digital signals representing audio signals read from a record carrier of a system for the diffusion of audio-visual signals, the signals being coded using a coder in accordance with any of claims 14 to 17 and susceptible of presenting alterations, the decoder being provided with a register (301) for detected reading alterations, characterized in that it comprises a shift register (302) with a serial input ($E_2$) and the parallel outputs of which are connected to the inputs of a first logic circuit (305), comparing and majority decision circuits (303, 304) receicing the most significant outputs of the first logic circuit (305) and signals originating from the detected reading alterations register (301), a multiplexing circuit (307a, 306a) receiving control signals from the comparing and majority decision circuit and the most significant outputs of the first logic circuit, and the outputs of which are connected to the inputs of a first buffer memory (307b, 306b), a second buffer memory (308a, 308b) receiving the least significant outputs of the first logic circuit (305), the outputs of the first and second buffer memories being connected to a second logic circuit (310), and a digital-analog converter (311) the parallel inputs of which receive the outputs of the second logic circuit.

19. Decoder in accordance with claim 18, characterized in that the first logic circuit (305) is formed by inverter circutis.

20. Decoder in accordance with claim 18, characterized in that the second logic circuit (310) is formed by »EXCLUSIVE OR« logic gates.

21. Decoder in accordance with claim 18, for digital signals representing audio signal originating form a plurality of sources to be multiplexed, characterized in that it further comprises a multiplexer (309) receiving the outputs of the first and second buffer memories (306b, 307b, 308a, 308b) and the outputs of which are connected to the inputs of the second logic circuit (310).

22. System for the diffusion of audio-visual signals in accordance with any of the preceding claims, characterized in that optic means are used for the transcription of stored signals on the record carrier.

23. System for the diffusion of audio-visual signals in accordance with any of the preceding claims, characterized in that magnetic means are used for the transcription of stored signals on the record carrier.

Fig.1

Fig.2

FIG. 3

Fig. 4

Fig.5

| V | $2^9$ | $2^8$ | $2^7$ | $2^6$ | $2^5$ | $2^4$ | $2^3$ | $2^2$ | $2^1$ | $2^0$ |
|---|---|---|---|---|---|---|---|---|---|---|
| +V | 1 | 1 | 1 | 1 | 1 | 1 | 1 | 1 | 1 | 1 |
| $0+\varepsilon$ | 1 | 0 | 0 | 0 | 0 | 0 | 0 | 0 | 0 | 0 |
| $0-\varepsilon$ | 0 | 1 | 1 | 1 | 1 | 1 | 1 | 1 | 1 | 1 |
| −V | 0 | 0 | 0 | 0 | 0 | 0 | 0 | 0 | 0 | 0 |

Fig.6

| V | $2^9$ | $2^8$ | $2^7$ | $2^6$ | $2^5$ | $2^4$ | $2^3$ | $2^2$ | $2^1$ | $2^0$ |
|---|---|---|---|---|---|---|---|---|---|---|
| +V | 1 | 1 | 1 | 1 | 1 | 1 | 1 | 1 | 1 | 1 |
| $0+\varepsilon$ | 1 | 0 | 0 | 0 | 0 | 0 | 0 | 0 | 0 | 0 |
| $0-\varepsilon$ | 0 | 0 | 0 | 0 | 0 | 0 | 0 | 0 | 0 | 0 |
| −V | 0 | 1 | 1 | 1 | 1 | 1 | 1 | 1 | 1 | 1 |

| A | B | A′ | B′ | A″ | B″ |
|---|---|---|---|---|---|

Fig.7

| $A_1$ | $B_1$ | $A_2$ | $A'_1$ | $B'_1$ | $B_2$ | $A''_1$ | $B''_1$ |
|---|---|---|---|---|---|---|---|

Fig.8

Fig. 9

f

0,1μS          1μS          Δt  μS

0 010 506